# EUROPÄISCHE PATENTANMELDUNG

(11) **EP 2 388 096 A1**
(43) Veröffentlichungstag der Anmeldung: **23.11.2011**
(21) Anmeldenummer: 11165411.7
(22) Anmeldetag: 10.05.2011
(51) Int. Cl.: B23C 5/10

(54) **Fräswerkzeug**

(30) Priorität: 21.05.2010 DE 102010022189; 21.05.2010 DE 102010033106
(71) Anmelder: Wendling, Rudolf, 93333 Neustadt an der Donau (DE)
(72) Erfinder: Wendling, Rudolf, 93342 Saal/Donau (DE)
(74) Vertreter: Hannke, Christian

(57) **Zusammenfassung**

Fräserwerkzeug (1) zum spanenden Bearbeiten von Körpern insbesondere Kunststoffkörpern, mit einem als Rotationskörper ausgebildeten Grundkörper (2), an dem durch Materialabtrag mindestens ein erster sich zumindest teilweise spiralförmig um eine Rotationsachse erstreckender Bearbeitungsabschnitt ausgebildet ist, wobei die Bearbeitungsschnitte zum Fräsen mit dem Körper in Kontakt bringbar ist und einen daran anschließenden Spanaufnahmebereich (4) zum Abführen des abgetragenen Materials aufweist, wobei mindestens der Spanaufnahmebereich (4) neben dem Bearbeitungsbereich durch eine zusätzlich zumindest teilweise bearbeitete Kante (9) begrenzt ist.

## Beschreibung

Die vorliegende Erfindung bezieht sich auf ein Fräserwerkzeug zum spanenden Bearbeiten von Körpern gemäß dem Oberbegriff des unabhängigen Patentanspruches 1. Derartige Fräserwerkzeuge werden überwiegend auf Roboterfräszellen und auf CNC-Fräsen zum Bearbeiten von beispielsweise Nichtmetallen, wie Kunststoffen, Holz, Glasfaser, Carbon und ähnlichem verwendet.

Insbesondere bei der Bearbeitung von Kunststoffen weisen die aus dem Stand der Technik bekannten Fräserwerkzeuge den Nachteil auf, dass der maximal mögliche Vorschub, d. h. das Bewegen des Fräsers in das Werkzeug bzw. entlang des Werkstücks, nicht maximal ausgenutzt werden kann. Dies resultiert daraus, dass beim spanenden Bearbeiten des jeweiligen Körpers der Span nicht mit ausreichend hoher Geschwindigkeit aus der Frässtelle abgeführt werden kann und somit ein Verstopfen bzw. Blockieren des Fräsers erfolgt, wodurch dieser beschädigt bzw. zerstört werden kann.

Es ist daher Aufgabe der vorliegenden Erfindung, ein Fräserwerkzeug bereitzustellen, das derart ausgebildet ist, dass selbst bei hohen Vorschubgeschwindigkeiten eine ausreichend schnelle Abfuhr des Spans sichergestellt ist.

Die Lösung der zuvor gestellten Aufgabe erfolgt erfindungsgemäß durch ein Fräserwerkzeug zum spanenden Bearbeiten von Körpern, insbesondere Kunststoffkörpern. Dieses Spanwerkzeug weist bevorzugt einen als Rotationskörper ausgebildeten Grundkörper auf, an dem durch Materialabtrag mindestens ein erster sich teilweise spiralförmig um eine Rotationsachse erstreckender Bearbeitungsschnitt ausgebildet ist. Der Bearbeitungsabschnitt zum Fräsen mit dem zu bearbeitenden Körper in Kontakt bringbar ist und weist einen daran anschließenden Spanaufnahmebereiche zum Abführen des abgetragenen Materials auf oder bildet diesen Spanaufnahmebereich aus. Erfindungsgemäß ist mindestens ein Spanöffnungsbereich neben dem Bearbeitungsbereich durch eine zusätzliche, zumindest teilweise bearbeitete Kante begrenzt. Es ist somit bevorzugt am ersten und/oder zweiten Spanaufnahmebereich die besonders bevorzugt zumindest teilweise bearbeitete Kante vorgesehen bzw. ausgebildet.

Bevorzugt ist an dem Grundkörper durch Materialabtrag ein zweiter sich zumindest teilweise spiralförmig um eine Rotationsachse erstreckender Bearbeitungsabschnitt ausgebildet, wobei der zweite Bearbeitungsabschnitt zum Fräsen mit dem Körper in Kontakt bringbar ist und einen daran anschließenden Spanaufnahmebereich zum Abführen des Abgetragenen Materials aufweist, der vom Spanaufnahmebereich des ersten Bearbeitungsabschnitts beabstandet ist.

Diese Kante ist vorteilhaft, da sie ein Austreten des Spans aus dem jeweiligen Spanaufnahmebereich erleichtert, da der Spanaufnahmebereich durch das Abschleifen dieser Kante partiell kleiner, d. h. bevorzugt weniger umschließend, ausgebildet ist. Dies hat den Vorteil, dass der Span einfacher abgeführt werden kann bzw. sich einfacher vom Fräserwerkzeug löst. Es kann hierbei auch von einem vergrößerten Öffnungswinkel gesprochen werden.

In einer weiteren bevorzugten Ausführungsform der vorliegenden Erfindung ist die Kante über die gesamte Länge des Bearbeitungsbereichs, bevorzugt über zwei Drittel der Länge des Bearbeitungsbereichs und besonders bevorzugt über die Hälfte des Bearbeitungsbereichs zumindest teilweise abgeschliffen. Dies hat den Vorteil, dass die Bearbeitung der besagten Kante, d. h. das Abschleifen der Kante, lediglich in dem Bereich zu erfolgen hat, der tatsächlich mit dem zu bearbeitenden Körper spanend zusammenwirkt.

Gemäß einer weiteren Bevorzugten Ausführungsform der vorliegenden Erfindung erstreckt sich der erste Spanaufnahmebereich in Umfangsrichtung um ein Vielfaches weiter als der zweite Spanaufnahmebereich.

Diese Ausführungsform ist vorteilhaft, da durch die unterschiedlich ausgebildeten Spanaufnahmebereiche zumindest ein Hauptspanabführbereich und ein Nebenspanabführbereich ausgebildet werden. Zu dem Zeitpunkt, in dem der Hauptspanabführbereich keine weiteren Materialanteile aufnimmt, da beispielsweise der daran ausgebildete Bearbeitungsabschnitt nicht mit dem zu bearbeitenden Material zusammenwirkt, ist es möglich, dass der Nebenspanabführbereich zum Abführen von Span eingesetzt wird.

Das sich der erste Spanaufnahmebereich in Umfangsrichtung um ein Vielfaches weiter erstreckt als der erste Spanaufnahmebereich ist bevorzugt auf die geometrische Gestaltung der Querschnittsfläche des Grundkörpers im Bereich der Spanaufnahmebereiche zu entnehmen. Es ist hiermit insbesondere zu verstehen, dass die zwei den ersten Spanöffnungsbereich gegenüber der Umfangsfläche des Grundkörpers begrenzenden Kanten wesentlich weiter voneinander beabstandet sind als die den zweiten Spanöffnungsbereich gegenüber der Umfangsfläche des Grundkörpers begrenzenden Kanten. Der Abstand zwischen den den jeweiligen Spanaufnahmebereich begrenzenden Kanten kann auch als Breite bezeichnet werden.

Mit dem Faktor "Vielfaches" wird bevorzugt ein beliebiges Vielfaches, bevorzugt ein 1- bis 8-faches ganzzahliges oder nicht ganzzahliges Vielfaches und besonders bevorzugt ein 1-bis 4-faches Vielfaches verstanden.

In einer weiteren bevorzugten Ausführungsform der vorliegenden Erfindung sind eine Vielzahl erster und/oder zweiter Spanöffnungsbereiche am Grundkörper ausgebildet. Diese Ausführungsform hat den Vorteil, dass z. B. in Abhängigkeit des jeweiligen Fräserwerkzeugdurchmessers und/oder des Einsatzbereiches bzw. Anwendungsbereiches des Fräserwerkzeugs unterschiedliche Geometrien realisierbar sind. So ist beispielsweise denkbar, dass ein erster Spanöffnungsbereich und 2, 3, 4 oder mehr zweite Spanöffnungsbereiche vorgesehen sind. Ebenfalls vorstellbar wäre, dass ein zweiter Spanöffnungsbereich und 2, 3, 4 oder mehrere erste Spanöffnungsbereiche vorsehbar sind und bevorzugt entsprechend der Anzahl der ersten Spanöffnungsbereiche die gleiche Anzahl an zweiten Spanöffnungsbereichen vorsehbar ist. Somit ist ersichtlich, dass insgesamt eine beliebige Anzahl, z.B. 2, 3, 4 oder mehr Schneiden, am Fräserwerkzeug ausgebildet sein können. Hinsichtlich der geometrischen Eigenschaften der erfindungsgemäßen Fräse ist weiterhin vorstellbar, dass die Fräserwerkzeuge rechtsschneidige und/oder linksschneidige sowie rechtsspiralige oder linksspiralige Werkzeuge sind. Ferner kann das erfindungsgemäße Fräserwerkzeug verschiedene Steigungen, beispielsweise in einem Bearbeitungsbereich oder zweier Bearbeitungsbereiche aufweisen. Weiterhin ist es vorstellbar, dass der Spanwinkel und/oder der Freiwinkel je nach Einsatzgebiet oder in Abhängigkeit weiterer geometrischer Eigenschaften abhängig oder völlig unabhängig einstellbar sind. Besonders bevorzugt sind beispielsweise der Spanwinkel und der Freiwinkel des ersten und zweiten Bearbeitungsabschnitts gleich ausgebildet, wobei unterschiedlich ausgebildete Span- und Freiwinkel ebenfalls vorteilhaft sein können.

In einer weiteren bevorzugten Ausführungsform der vorliegenden Erfindung weist das Fräserwerkzeug im Bereich des Bearbeitungsabschnitts eine Stirnfläche auf, die zumindest abschnittsweise gegenüber einer sich rechtwinklig zur Rotationsachse erstreckenden Ebene geneigt ausgebildet ist. Diese Ausführungsform ist vorteilhaft, da die Stirnfläche beispielsweise einzelne oder mehrere Anteile einer geneigten Ebene, eine gebogene Anteile aufweisende Form und/oder mit der entsprechenden Negativ-Form derart versehen sein kann, dass eine bzw. mehrere beliebig ausgebildete Stirnschneiden vorsehbar bzw. ausbildbar oder ausgebildet sind.

In einer weiteren bevorzugten Ausführungsform der vorliegenden Erfindung sind einzelne Anteile der geneigten Stirnfläche eben oder kurvenförmig ausgebildet und erstrecken sich in Richtung oder entgegen der Längsrichtung des Grundkörpers.

In einer weiteren bevorzugten Ausführungsform der vorliegenden Erfindung weist mindestens einer der Spanöffnungsbereiche eine Kurvenform auf, die von einem Kreisbogenabschnitt verschieden ist. Diese Ausführungsform ist vorteilhaft, da der Spanöffnungsbereich so eine Geometrie aufweisen kann, die geeignet ist, um beispielsweise im Zusammenspiel mit der Fliehkraft, einen optimierten Abtransport des Spans zu ermöglichen. Es ist hierbei ebenfalls vorstellbar, dass der Spanöffnungsbereich als Kreisbogenabschnitt ausgebildet ist oder ebene Anteile aufweist.

In einer weiteren bevorzugten Ausführungsform der vorliegenden Erfindung ist das Verhältnis aus der Breite des ersten Spanöffnungsbereichs zur Tiefe des ersten Spanöffnungsbereichs größer als das Verhältnis aus der Breite des zweiten Spanöffnungsbereichs zur Tiefe des zweiten Spanöffnungsbereichs. Diese Ausführungsform ist vorteilhaft, da beispielsweise aus strukturellen Gründen und somit hinsichtlich der Stabilität, wie auch hinsichtlich des Spanabflusses, ein im Wesentlichen schlanker und ein im Wesentlichen breiter Bereich bzw. jeweils eine Vielzahl davon vorteilhaft sind.

In einer weiteren bevorzugten Ausführungsform der vorliegenden Erfindung weist der Grundkörper einen Schachtabschnitt mit einem Durchmesser auf, der größer ist als der Durchmesser des Bearbeitungsabschnitts.

Diese Ausführungsform ist vorteilhaft, da der Fräser so mit einer höheren Stabilität ausgestattet ist.

In einer weiteren bevorzugten Ausführungsform der vorliegenden Erfindung besteht der Fräser aus einem Werkstoff ausgewählt aus der Gruppe zumindest bestehend aus Schnellarbeitsstahl (ASS), Hartmetall, Cermet und/oder ähnlichem.

Diese Ausführungsform ist vorteilhaft, da je nach Größe, Anwendungsbereich, geometrischer Gestaltung und/oder ähnlichen Faktoren der jeweils optimale Werkstoff für den Fräser ausgewählt werden kann.

Vorteile und Zweckmäßigkeiten sind der nachfolgenden Beschreibung in Verbindung mit der Zeichnung zu entnehmen. Hierbei zeigen:
- Fig. 1: ein Beispiel eines Fräserwerkzeugs währen einer ersten Bearbeitungsphase;
- Fig. 2: ein Beispiel eines Fräserwerkzeugs nach der ersten Bearbeitungsphase;
- Fig. 3: ein Beispiel eines Fräserwerkzeugs in einer weiteren Bearbeitungsphase;
- Fig. 4: ein Beispiel eines Fräserwerkzeugs nach der weiteren Bearbeitungsphase;
- Fig. 5: ein Beispiel eines Fräserwerkzeugs, in das ein zweiter Spanbereich eingearbeitet wird;
- Fig. 6: ein Beispiel eines Fräserwerkzeugs, dessen zweiter Spanbereich weiter bearbeitet wird;
- Fig. 7: ein Beispiel eines Fräserwerkzeugs mit einem speziell bearbeiteten Spanbereich;
- Fig. 8: ein Beispiel eines Fräserwerkzeugs in dreidimensionaler Darstellung;
- Fig. 9: ein Beispiel eines Fräserwerkzeugs in einem Bearbeitungszustand; und
- Fig. 10: ein Beispiel eines weiteren Fräserwerkzeugs in dreidimensionaler Darstellung.

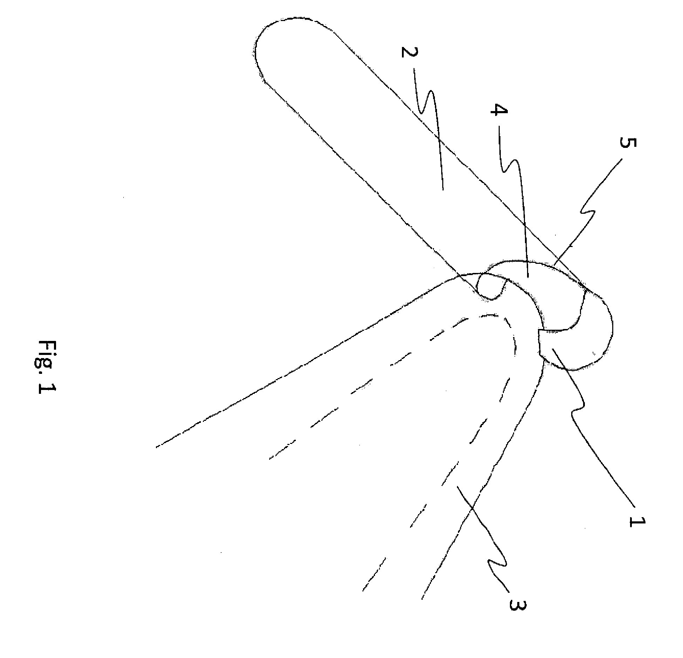

Fig. 1 zeigt ein Fräserwerkzeug 1, das zumindest teilweise durch einen zumindest teilweise bearbeiteten und besonders bevorzugt im Wesentlichen zylindrischen Grundkörper 2 ausgebildet ist und in den mittels eines Bearbeitungswerkzeugs 3, das bevorzugt ein Werkzeug zur spanenden Bearbeitung ist, ein Spanaufnahmebereich 4 in dem Grundkörper 2 bevorzugt spiralförmig ausgebildet wird. Das Bearbeitungswerkzeug 3 kann neben anderen Werkzeugen bevorzugt ein Schleifwerkzeug oder ein Fräserwerkzeug sein. Mit dem Bearbeitungswerkzeug 3 oder einem weiteren Bearbeitungswerkzeug ist in dem in Fig. 1 dargestellten Bearbeitungsschritt, in dem der Spanaufnahmebereich 4 ausgebildet wird oder in einem nachgelagerten Bearbeitungsschritt, neben dem Erzeugen des Spanaufnahmebereichs 4 bevorzugt ebenfalls die Schneide 5 des Fräserwerkzeugs 1 am Grundkörper 2, insbesondere im Bereich des Übergangs zwischen dem Spanaufnahmebereich 4 und der Grundkörperumfangsfläche, ausbildbar.

Die Schneide 5 bildet einen Winkel gegenüber der Umfangsfläche aus. Dieser Winkel kann bei mehreren Schneiden gleich oder verschieden sein.

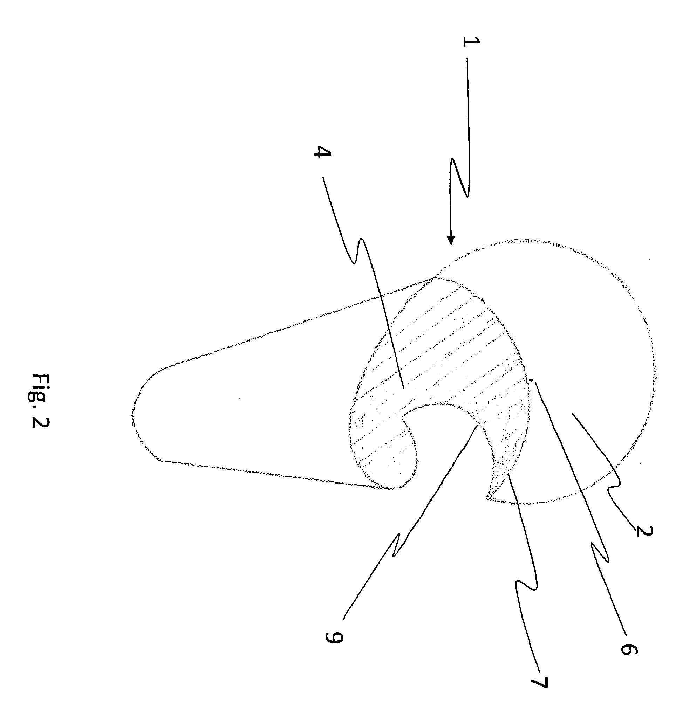

In Fig. 2 ist der Grundkörper 2 mit dem eingearbeiteten Spanaufnahmebereich 4 dargestellt. Der Spanaufnahmebereich 4 ist durch eine sphärische, bevorzugt bogenförmige und besonders bevorzugt teilkreisförmige Kurve bzw. den ersten Kurvenanteil 7 dargestellt. Durch das Bezugszeichen 6 wird das Zentrum bzw. die Rotationsachse des Grundkörpers 2 bezeichnet. Der erste Kurvenanteil 7 bzw. der Spanaufnahmebereich 4 erstreckt sich bevorzugt lediglich in einem Bereich der Querschnittsfläche des Fräserwerkzeugs 1, wobei der Bereich sich besonders bevorzugt maximal über die Hälfte der Querschnittsfläche und/oder nicht über das Zentrum 6 des Grundkörpers 2 hinweg erstreckt. Der Spanaufnahmebereich 4 wird z.B. durch die Schneide 5 und die Kante 9 begrenzt.

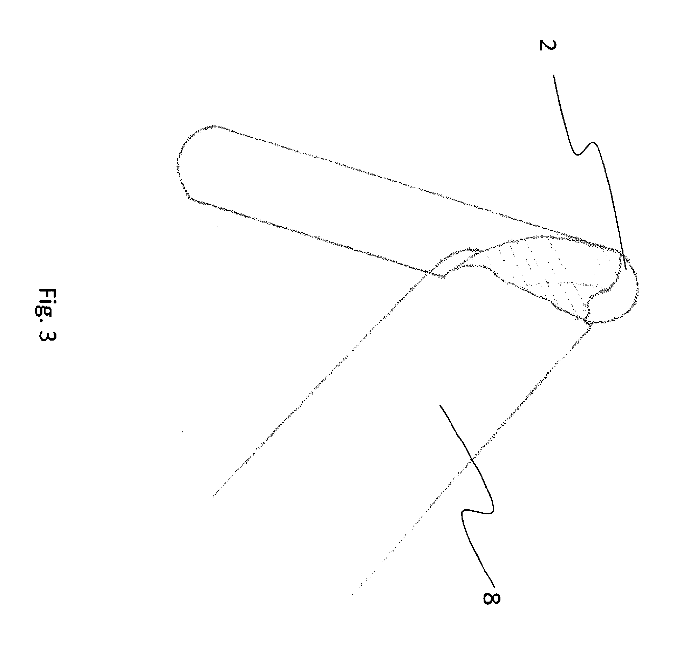

In Fig. 3 ist ein weiterer Bearbeitungsschritt dargestellt. Der Grundkörper 2 wird dabei mittels eines weiteren Werkzeugs 8 oder einem ähnlichen bzw. demselben Werkzeug, wie z.B. in Fig. 1, bevorzugt spanend bearbeitet. Durch diesen Bearbeitungsschritt wird der Spanaufnahmebereich 4 vergrößert, wodurch beispielsweise eine bessere Spanabfuhr erfolgen kann. Die Vergrößerung des Spanaufnahmebereichs 4 erfolgt dabei durch Ausbilden einer bevorzugt wellenförmigen Körperkante des Fräserwerkzeugs 1. Die bevorzugt wellenförmige Körperkante lässt sich beispielsweise unterschiedlichen Querschnitten durch das Fräserwerkzeug 1 entnehmen. Ein Querschnitt erfolgt dabei bevorzugt in der Ebene rechtwinklig zu der Drehachse bzw. zum Zentrum 6 des Grundkörpers 2. Aufgrund des sich in Längsrichtung bzw. in Richtung der Drehachse spiralförmig am Grundkörper 2 erstreckenden Spanaufnahmebereichs 4 ist die wellenförmig ausgebildete Kurve in verschiedenen Querschnitten verschieden geneigt bzw. orientiert.

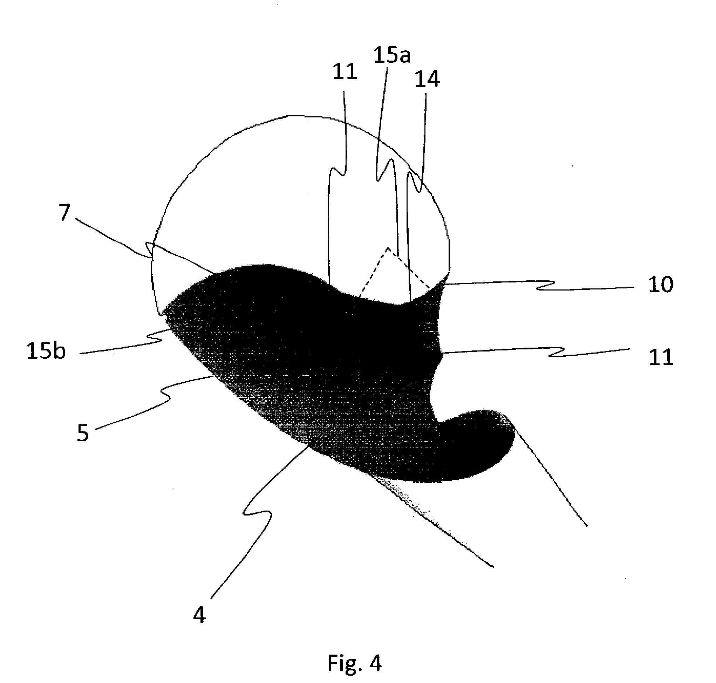

Fig. 4 ist zu entnehmen, dass die Vergrößerung 10 des Spanaufnahmebereichs 4 einem Bearbeiten bzw. Abschleifen oder Abfräsen der Kante 9 (vgl. Fig. 2) entspricht. Die dabei resultierende neue Körperkanten 11, 13 bzw. der zweite Kurvenanteil 14 weist lineare oder sphärische, bevorzugt bogenförmige oder teilkreisförmige Kurvenanteile auf. Es ist weiterhin denkbar, dass der Übergang vom ersten Kurvenanteil 7 des Spanaufnahmebereichs 4 zu dem zweiten bzw. weiteren Kurvenanteil 14 fließend oder durch einen abrupten Steigungswechsel bzw. einer abrupten Steigungsveränderung erfolgt. Fig. 4 ist eine derartige abrupte Steigungsveränderung, die mit dem Bezugszeichen 11 als Übergang bezeichnet wird, zu entnehmen. Bevorzugt weist der zweite Kurvenanteil 14 in einer Querschnittsbetrachtung den gleichen Radius oder einen größeren Radius auf als der erste Kurvenanteil 7. Besonders bevorzugt ist jedoch der Radius des zweiten Kurvenanteils 14 kleiner als der Radius des ersten Kurvenanteils 7. Wobei der Radius auch jeweils als durchschnittlicher Abstand zu einem Kurvenzentrum 15a, 15b verstanden werden kann. Der Spanaufnahmebereich 4 wird z.B. durch die Schneide 5 und die Kante 11 oder die Kante 13, die den zweiten Kurvenanteil 14 gegenüber der Umfangsfläche 21 des Grundkörpers 2 abgrenzt, begrenzt.

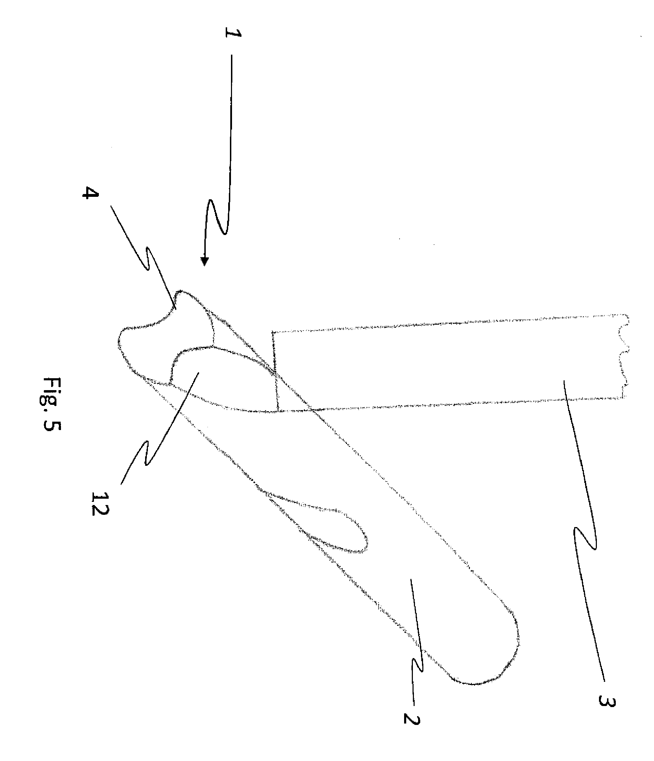

Fig. 5 offenbart eine weitere Darstellung des Grundkörpers 2, in dem mit einem Bearbeitungswerkzeug 3, 8 ein weiterer Spanaufnahmebereich 12 in den Grundkörper 2 eingearbeitet wird.

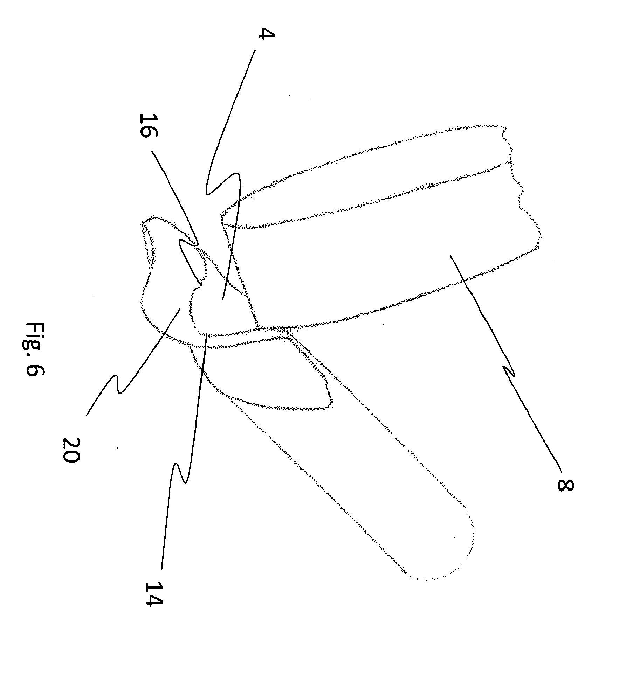

In Fig. 6 ist ebenfalls eine weitere Darstellung des Grundkörpers 2 gezeigt, in diesem Grundkörpers 2 wird mittels eines weiteren Bearbeitungswerkzeugs 8 der zweite Kurvenanteil 14 eingearbeitet. Es ist hierbei vorstellbar, dass mittels den Bearbeitungswerkzeugen 3, 8 oder weiteren Bearbeitungswerkzeugen weitere von den Kurvenanteilen 7, 14 verschiedene Kurvenanteile oder Rillen oder ähnliches stets über die gleiche Grundkörperlänge und/oder verschiedene Grundkörperlängenanteile bevorzugt in Längsrichtung der Drehachse eingearbeitet werden.

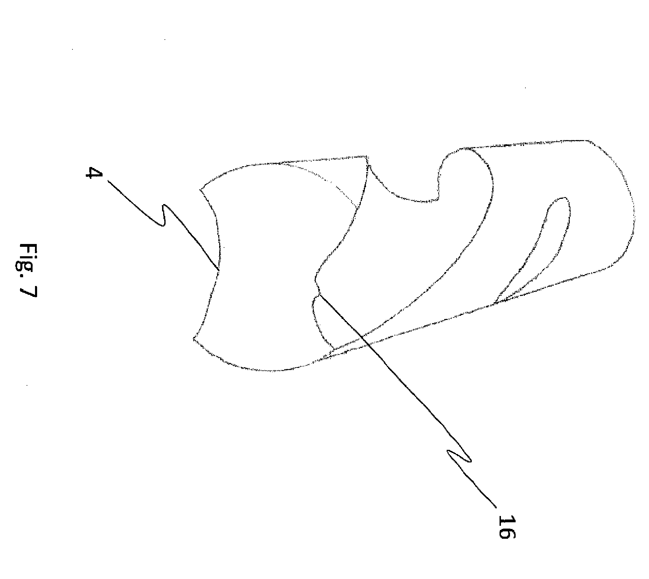

In Fig. 7 ist eine weitere perspektivische Darstellung des Fräserwerkzeugs 1 gezeigt, wobei das Fräserwerkzeug 1 in dem Spanaufnahmebereich 4 eine Erhebung 16 aufweist. Diese Erhebung 16 ist dreiecksförmig ausgebildet und erstreckt sich spiralförmig ausgehend von der Stirnseite 20, insbesondere einer Stirnfläche, zumindest teilweise und bevorzugt über ein Drittel, die Hälfte, dreiviertel oder die vollständige Länge des Spanaufnahmebereichs 4.

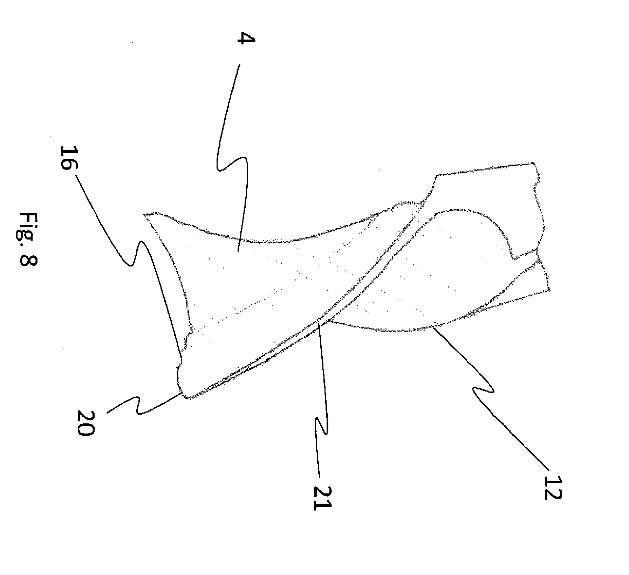

Fig. 8 ist eine perspektivische Darstellung des Fräserwerkzeugs 1 zu entnehmen, wobei das Fräserwerkzeug 1 in dieser Darstellung im Wesentlichen gleichförmig ausgebildete Spanaufnahmebereiche 4 aufweist. Es ist hierbei jedoch ebenfalls denkbar, dass die Spanaufnahmebereiche 4, 12 unterschiedliche Tiefen und unterschiedliche Radien aufweisen. Tiefe ist hierbei bevorzugt als der jeweils minimale Abstand des jeweiligen Spanaufnahmebereichs 4, 12 zu der Drehachse 6 zu verstehen.

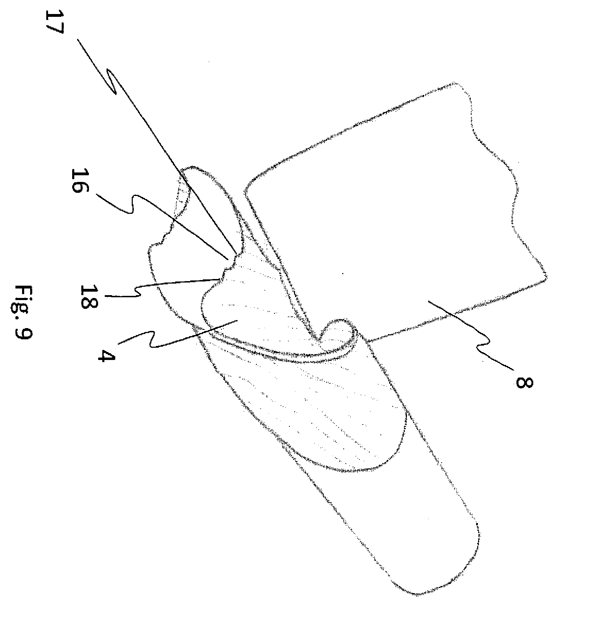

Fig. 9 offenbart ein Fräserwerkzeug 1, dessen Querschnitt Körperkanten aufweisen, die wellenartig ausgebildet sind. Es erschließt sich daraus, dass durch die Bezeichnung "wellenartig" nicht zwingend gleichförmig ausgebildete gegeneinander gerichtete Kurvenabschnitte verstanden werden müssen, sondern ebenfalls stark variierende Kurvenabschnitte, wie beispielsweise der Spanaufnahmebereich 4, die Rillen 17, 18 und die Erhebung 16 verstanden werden können. Es ist ebenfalls denkbar, dass anstelle bzw. zusätzlich zur Erhebung 16 weitere Erhebungen vorgesehen sind. Dies gilt ebenfalls für die Rillen 17, 18, wodurch anstelle der Rillen 17, 18 bzw. zusätzlich zu den Rillen 17, 18 weitere ähnliche und/oder verschieden ausgebildete Rillen vorgesehen sein können.

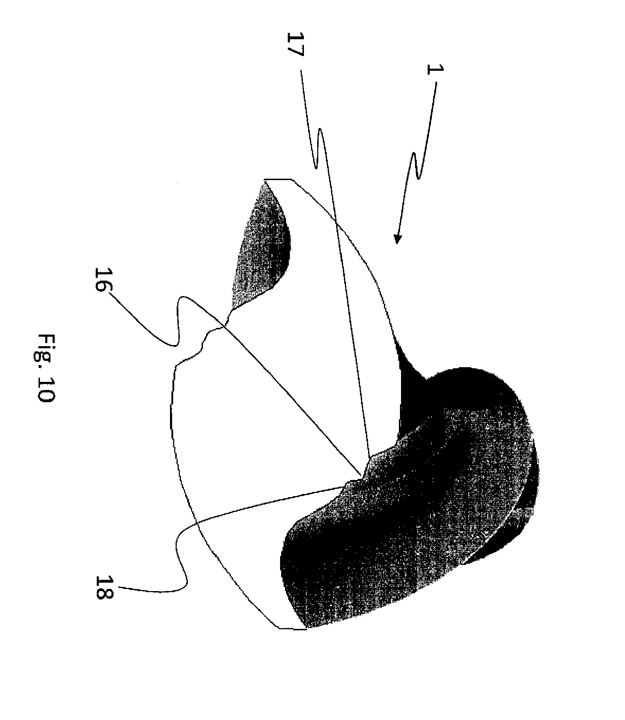

Fig. 10 ist das in Fig. 9 dargestellte Fräserwerkzeug 1 ohne das Bearbeitungswerkzeug 8 zu entnehmen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fräserwerkzeug
- 2: Grundkörper
- 3: Bearbeitungswerkzeug
- 4: Spanaufnahmebereich
- 5: Schneide
- 6: Rotationsachse
- 7: erster Kurvenanteil
- 8: weiteres Bearbeitungswerkzeug
- 9: Kante
- 10: Vergrößerung des Spanaufnahmebereichs
- 11: Übergang
- 12: weiterer Spanaufnahmebereich
- 13: Kante
- 14: zweiter Kurvenanteil
- 15a, 15b: Kurvenzentrum
- 16: Erhebung
- 17, 18: Rillen
- 20: Stirnseite
- 21: Umfangsfläche

## Patentansprüche

1. Fräserwerkzeug (1) zum spanenden Bearbeiten von Körpern, insbesondere Kunststoffkörpern, mit einem als Rotationskörper ausgebildeten Grundkörper (2), an dem durch Materialabtrag mindestens ein erster sich zumindest teilweise spiralförmig um eine Rotationsachse (6) erstreckender Bearbeitungsabschnitt ausgebildet ist, wobei der Bearbeitungsabschnitt zum Fräsen mit dem Körper in Kontakt bringbar ist und einen daran anschließenden Spanaufnahmebereich (4) zum Abführen des abgetragenen Materials aufweist,
**dadurch gekennzeichnet, dass**
mindestens der Spanaufnahmebereich (4) neben dem Bearbeitungsbereich durch eine zusätzlich zumindest teilweise bearbeitete Kante (9) begrenzt ist.

2. Fräserwerkzeug nach Anspruch 1,
**dadurch gekennzeichnet, dass**
die Kante (9) mindestens über ein Drittel, bevorzugt die Hälfte und besonders bevorzugt zwei Drittel der Länge der Bearbeitungsabschnitte zumindest teilweise abgeschliffen ist.

3. Fräserwerkzeug nach Anspruch 1
**dadurch gekennzeichnet, dass**
an dem Grundkörper (2) durch Materialabtrag ein zweiter sich zumindest teilweise spiralförmig um eine Rotationsachse (6) erstreckender Bearbeitungsabschnitt ausgebildet ist, wobei der zweite Bearbeitungsabschnitt zum Fräsen mit dem Körper in Kontakt bringbar ist und einen daran anschließenden Spanaufnahmebereich (12 zum Abführen des Abgetragenen Materials aufweist, der vom Spanaufnahmebereich (4) des ersten Bearbeitungsabschnitts beabstandet ist.

4. Fräserwerkzeug nach Anspruch 1
**dadurch gekennzeichnet, dass**
der erste Spanaufnahmebereich (4) sich in Umfangsrichtung um ein Vielfaches weiter erstreckt als der zweite Spanaufnahmebereich (12).

5. Fräserwerkzeug nach Anspruch 4,
**dadurch gekennzeichnet, dass**
eine Vielzahl erster und/oder zweiter Spanöffnungsbereiche (4), (12) am Grundkörper (2) ausgebildet ist.

6. Fräserwerkzeug nach mindestens einem der vorangegangenen Ansprüche,
**dadurch gekennzeichnet, dass**
das Fräserwerkzeug (1) im Bereich des Bearbeitungsabschnittes eine Stirnfläche (20) aufweist, die zumindest abschnittsweise gegenüber einer sich rechtwinklig zur Rotationsachse (6) erstreckenden Ebene geneigt ausgebildet ist.

7. Fräserwerkzeug nach Anspruch 6,
**dadurch gekennzeichnet, dass**
einzelne Anteile der geneigten Stirnfläche (20) eben oder kurvenförmig ausgebildet sind und sich in Richtung oder entgegen der Längsrichtung des Grundkörpers (2) erstrecken.

8. Fräserwerkzeug nach mindestens einem der vorangegangenen Ansprüche,
**dadurch gekennzeichnet, dass**
mindestens einer der Spanöffnungsbereiche (4), (12) eine Kurvenform aufweist, die von einem Kreisbogenabschnitt verschieden ist.

9. Fräserwerkzeug nach mindestens einem der vorangegangenen Ansprüche,
**dadurch gekennzeichnet, dass**
das Verhältnis aus der Breite des ersten Spanöffnungsbereichs (4) zur Tiefe des ersten Spanöffnungsbereichs (4) größer ist als das Verhältnis aus der Breite des zweiten Spanöffnungsbereichs (14) zur Tiefe des zweiten Spanöffnungsbereichs (14).

10. Fräserwerkzeug nach mindestens einem der vorangegangenen Ansprüche,
**dadurch gekennzeichnet, dass**
der Grundkörper (2) einen Schaftabschnitt mit einem größeren Durchmesser als der des Bearbeitungsabschnitts aufweist.

11. Fräserwerkzeug nach mindestens einem der vorangegangenen Ansprüche,
**dadurch gekennzeichnet, dass**
der Fräserwerkstoff zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.
